# EUROPÄISCHE PATENTANMELDUNG

(11) **EP 3 795 728 A1**
(43) Veröffentlichungstag der Anmeldung: **24.03.2021**
(21) Anmeldenummer: 19197709.9
(22) Anmeldetag: 17.09.2019
(51) Int. Cl.: D04B 1/22

(54) **STRICKEN VON EDELMETALLNETZEN UND VERFAHREN MIT VERWENDUNG DIESER NETZE**

(71) Anmelder: UMICORE AG & CO. KG, 63457 Hanau-Wolfgang (DE)
(72) Erfinder: BORN, Dirk, 63505 Langenselbold (DE); KOENIGS, Dietmar, 63571 Gelnhausen (DE)

(57) **Zusammenfassung**

Die Erfindung umfaßt ein Verfahren zur Herstellung von großen Edelmetallnetzen auf Flachbettstrickmaschinen, welches die Schritte
• Bereitstellen von Edelmetalldraht und
• simultanes Stricken von jeweils einem Edelmetallnetz auf dem vorderen und hinteren Flachbett (8, 9) der Flachbettstrickmaschine
umfaßt, wobei das vordere und das hintere Edelmetallnetz durch verbindende Strickmaschen an einer Seite verbunden werden.

## Beschreibung

Edelmetallkatalysierte Gasreaktionen wie die Oxidation von Ammoniak mit Luftsauerstoff in der Salpetersäureproduktion (Ostwald-Verfahren) oder die Umsetzung von Ammoniak mit Methan in Anwesenheit von Sauerstoff zu Blausäure (Andrussow-Verfahren) haben seit langem erhebliche industrielle Bedeutung erlangt, werden durch sie doch im großtechnischen Maßstab Basischemikalien für die chemische Industrie und für die Düngemittelproduktion bereitgestellt (Andreas Jess, Peter Wasserscheid: Chemical Technology (Wiley-VCH Verlag, Weinheim 2013) Kapitel 6.4.)

Kern dieser heterogen katalysierten Gasreaktionen sind Edelmetallkatalysatoren in Form gasdurchlässiger räumlicher Gebilde, an bzw. in denen die Reaktion abläuft. Hierbei haben sich seit geraumer Zeit Netze in Form von Geweben (DE4028916 C2) oder Gestricken (EP0364153 B1, DE4206199 C1) aus feinen Edelmetalldrähten durchgesetzt. Die Edelmetalldrähte bestehen überwiegend aus Platin, Rhodium oder aus Legierungen dieser Metalle mit anderen Edel- oder Unedelmetallen. Typisch sind hierbei Platin-Rhodium-Legierungen mit 4 bis 12 Gew.-% Rhodium und Platin-Palladium-Rhodium-Legierungen mit 4 bis 12 Gew.-% Palladium und Rhodium.

Die Katalysatornetze werden dabei üblicherweise in einem Strömungsreaktor in einer Ebene senkrecht zur Strömungsrichtung des Gasgemisches angeordnet. Auch kegelförmige Anordnungen sind bekannt. Es werden zweckmäßigerweise meist mehrere Netze hintereinander angeordnet und zu einem Katalysatornetzstapel zusammengefasst.

Üblicherweise sind strömungsabwärts des Katalysatornetzstapels nachgeschaltete Platinauffangnetze, sogenannte Getternetze, angeordnet, die der Rückgewinnung von aus den Katalysatornetzen in Form von gasförmigen Oxiden konvektiv mit dem Reaktionsgasstrom ausgetragenem Platin und Rhodium dienen. Diese Getternetze enthalten meist Drähte aus Palladium oder Palladiumlegierungen, wie z. B. Palladium-Nickel-Legierungen mit 2 bis 15 Gew.-% Nickel, Palladium-Kupfer-Legierungen mit 2 bis 15 Gew.-% Kupfer und Palladium-Nickel-Kupfer-Legierungen mit 2 bis 15 Gew.-% Nickel und Kupfer. Sowohl zwischen dem Katalysatornetzstapel und dem ersten Getternetz als auch zwischen den Getternetzen befinden sich üblicherweise Trennnetze aus Hochtemperaturstahl, die ein Zusammensintern der Netze verhindern sollen.

Die Erfindung ist für Katalysator- und Getternetze anwendbar. Im weiteren wird deshalb von Edelmetallnetzen gesprochen, wobei diese Bezeichnung Katalysator- und Getternetze umfassen soll.

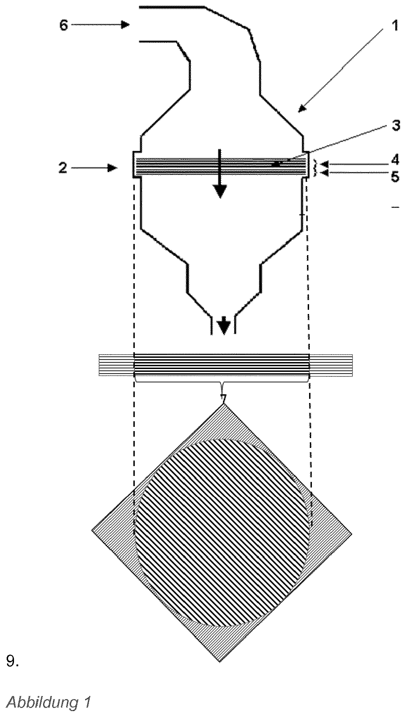

**Abbildung 1** zeigt am Beispiel der katalytischen Ammoniakoxidation schematisch den Reaktor mit dem darin verbauten Netzstapel, dessen Funktion im Folgenden beschrieben wird:
In der Reaktionsebene (2) des Strömungsreaktors (1) ist in einer Ebene senkrecht zur Strömungsrichtung der Netzstapel (3), der aus mehreren hintereinander liegenden Katalysatornetzen (4) und nachgeschalteten Trenn- und Getternetzen (5) besteht, angeordnet. Dieser Netzstapel mit einem Mindestnetzdurchmesser (7) wird durch Einklemmen in seiner Position gehalten.

Das Ammoniak-Luftsauerstoffgemisch (mit einem Ammoniakgehalt von 9 - 13 Vol.-%) (6) durchströmt unter atmosphärischem oder erhöhtem Druck den Netzstapel (3), wobei im Eintrittsbereich die Zündung des Gasgemisches erfolgt und die Verbrennungsreaktion zu Stickstoffmonoxid (NO) und Wasser die gesamte Reaktionszone erfasst:

4NH3 + 5O2 (Luft) → 4NO + 6H₂O

Das NO im abströmenden Reaktionsgasgemisch reagiert in der Folge mit dem überschüssigen Luftsauerstoff zu NO₂:

2NO + O₂ → 2NO₂

Das NO₂ reagiert wiederum in einer nachgeschalteten Absorption mit Wasser zu Salpetersäure, welche etwa der Düngemittelproduktion zugeführt wird:

3NO₂ + H₂O → 2HNO₃ + NO

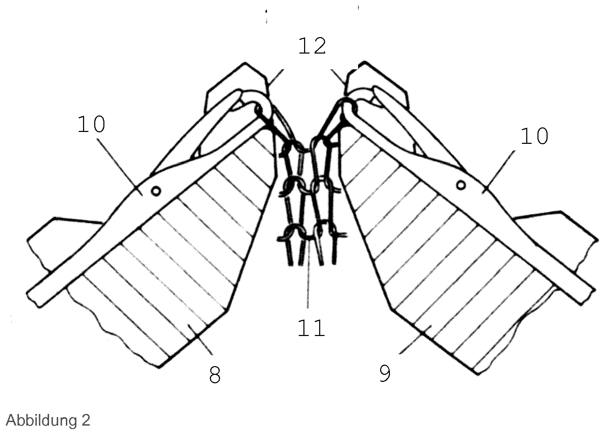

Der Aufbau der Flachbettstrickmaschine wird in Abbildung 2 verdeutlicht. Die Flachbettstrickmaschine besitzt ein vorderes (8) und ein hinteres Nadelbett (9), in welche die Nadeln (10) verbaut sind. Die Nadeln durchlaufen je nach Programmierung der Maschine unterschiedliche Stellungen. Die Programmierung gibt demnach die Struktur des Gestricks vor. Eine Besonderheit der Flachbettstricktechnik gegenüber anderen gewebebildenden Maschinen ist, dass man synchron auf dem vorderen als auch auf dem hinteren Nadelbett unabhängig voneinander Gestricke bilden kann (Einbettware).

Darüber hinaus können Abstandsgestricke (Zweibettware) gebildet werden, bei denen der Faden im Wechsel vorne und hinten Maschen oder Fang bildet. Das Gestrick wird nach unten zwischen den beiden Nadelbetten abgestrickt (11). Dies geschieht durch sukzessives Abschlagen der einzelnen geformten Maschen über die Abschlagsstellung und Abschlagstegkante (12)

Gestrickte Edelmetallnetze besitzen gegenüber gewebten Netzen eine Reihe von Vorteilen, weswegen sie heute im industriellen Einsatz bevorzugt werden. Zum einen bietet die Stricktechnik die Möglichkeit einer hohen Flexibilität in Hinblick auf Strickmuster, verwendete Drahtstärken und resultierendes Flächengewicht. Zum anderen lassen sich die Edelmetallgestricke ökonomischer herstellen, da bei der Stricktechnik kürzere Rüstzeiten als bei der Webtechnik anfallen. Dies bedingt insbesondere eine erheblich reduzierte Edelmetallbindung in der Produktion. Verwendet werden hierfür in der Regel Flachbettstrickmaschinen, auf denen Netze beliebiger Länge hergestellt werden können. Die maximale Breite ist jedoch normalerweise durch die Breite des Strickbetts vorgegeben. Für breitere Netze müssen mehrere Netze über eine Schweißnaht verbunden werden, welche aufgrund ihrer Gasundurchlässigkeit den Umsatz negativ beeinflusst und zudem einen mechanischen Schwachpunkt des Edelmetallnetzes darstellt. Des weiteren ist dieser weitere Fertigungsschritt mit höherem technischem Aufwand und zusätzlichen Produktionskosten verbunden.

Der vorliegenden Erfindung lag daher die Aufgabenstellung zugrunde, schweißnahtfreie Netze herzustellen, welche breiter als das Strickbett der Flachbettstrickmaschine sind und in einem Stück gestrickt werden können.

Diese Aufgabe wird gelöst durch ein Verfahren zur Herstellung von Edelmetallnetzen auf Flachbettstrickmaschinen, welches die Schritte
- Bereitstellen von Edelmetalldraht und
- simultanes Stricken von jeweils einem Edelmetallnetz auf dem vorderen und hinteren Flachbett der Flachbettstrickmaschine
beinhaltet, wobei das vordere und das hintere Edelmetallnetz durch verbindende Strickmaschen an einer Seite verbunden werden.

In einer bevorzugten Ausführungsvariante des Verfahrens wird das Netz, welches auf dem vorderen Flachbett gestrickt wird, aus Draht gleicher Zusammensetzung gestrickt wie das Netz, welches auf dem hinteren Flachbett gestrickt wird.

In einer Ausführungsvariante werden beide Edelmetallnetze in Form eines Halbkreises gestrickt, die dann auf der geraden Kante verbunden werden, so dass das Produkt ein rundes Edelmetallnetz beinhaltet.

In einer Ausführungsvariante besteht der Draht aus Platin oder einer Platinlegierung. Bevorzugt wird als Platinlegierung eine Legierung mit mindestens 75 Gew.-% Platin gewählt.

In einer weiteren Ausführungsvariante besteht der Draht aus Palladium- oder einer Palladiumlegierung. Bevorzugt wird als Palladiumlegierung eine Legierung mit mindestens 75 Gew.-% Palladium verwendet.

Des weiteren beinhaltet die Erfindung ein Verfahren zur katalytischen Oxidation von Ammoniak, welches die folgenden Schritte umfaßt:
- bereitstellen von Netzen entsprechend dem erfindungsgemäßen Verfahren
- Einbau eines Netzstapels der Netze enthält, die mithilfe des erfindungsgemäßen Verfahrens hergestellt wurden, in einen Strömungsreaktor (1)
- Zuführung eines Gases beinhaltend Ammoniak und Sauerstoff bei einer Temperatur im Strömungsreaktor zwischen 500°C und 1300°C und einem Druck zwischen 0,1 MPa und 1,4 MPa.
-

Im Folgenden wird die Erfindung anhand eines Beispiels beschrieben:

### Beispiel

Auf einer Flachbettstrickmaschine (Fa. Stoll, Typ CMS) mit einer Strickbettbreite von ca. 2,4 m (96 Inch) wird auf dem vorderen und hinteren Strickbett jeweils ein Netz mit einer Breite von 2,3 m gestrickt und auf einer Seite durch entsprechende Fadenführung verbunden. Somit entsteht ein Netz von 4,6 m Breite und beliebiger Länge.

Somit können durch Anwendung des erfindungsmäßigen Verfahrens schweißnahtfreie Netze bis zu einer Breite, die der doppelten Strickbettbreite entspricht, gestrickt werden.

### Vergleichsbeispiel

Auf einer Flachbettstrickmaschine mit einer Strickbettbreite von ca. 2,4 m (96 Inch) wird auf dem vorderen und hinteren Strickbett jeweils ein Netz mit einer Breite von 2,3 m gestrickt.

Die beiden Netze werden anschließend an einer Seite miteinander durch Verschweißen verbunden, um ein Netz mit einem Netzdurchmesser von 4,6 m darstellen zu können.

Das erfindungsgemäße Beispiel und das Vergleichsbeispiel führt zu einem Netz gleichen Durchmessers, jedoch erfordert das Vergleichsbeispiel einen weiteren Fertigungsschritt (Verschweißung). Außerdem weist das Produkt des Vergleichsbeispiels im Unterschied zum erfindungsgemäßen Beispiel eine Schweißnaht auf, die quer über die Reaktionszone verläuft und aufgrund ihrer Struktur die Gasdurchlässigkeit reduziert und damit die katalytische Wirkung negativ beeinflusst. Zudem stellt sie eine mechanische Schwachstelle dar, die insbesondere während des Netzwechsels zu Materialfehlern führen kann.

### Legende zu Abbildung 1:

1 Strömungsreaktor
2 Reaktionsebene
3 Netzstapel
4 Katalysatornetze
5 Getter- und Trennnetze
6 Reaktionsgas
7 Mindestnetzdurchmesser

### Legende zu Abbildung 2:

8 vorderes Nadelbett
9 hinteres Nadelbett
10 Nadeln
11 abgestricktes Produkt
12 Abschlagstegkante

## Patentansprüche

1. Verfahren zur Herstellung von Edelmetallnetzen auf Flachbettstrickmaschinen, die Schritte enthaltend
• Bereitstellen von Edelmetalldraht
• simultanes Stricken von jeweils einem Edelmetallnetz auf dem vorderen und hinteren Flachbett der Flachbettstrickmaschine
**dadurch gekennzeichnet, dass** das vordere und das hintere Edelmetallnetz durch verbindende Strickmaschen an einer Seite verbunden werden.

2. Verfahren gemäß Anspruch 1, **dadurch gekennzeichnet, dass** das Netz, welches auf dem vorderen Flachbett gestrickt wird, aus Draht gleicher Zusammensetzung gestrickt wird wie das Netz, welches auf dem hinteren Flachbett gestrickt wird.

3. Verfahren gemäß Anspruch 1 und / oder 2, **dadurch gekennzeichnet, dass** beide Edelmetallnetze in Form eines Halbkreises gestrickt werden, die dann auf der geraden Kante verbunden werden, so dass das Produkt ein rundes Edelmetallnetz beinhaltet.

4. Verfahren gemäß einem oder mehreren der Ansprüche 1 bis 3, **dadurch gekennzeichnet, dass** der verwendete Draht aus Platin oder einer Platinlegierung besteht.

5. Verfahren gemäß Anspruch 4, **dadurch gekennzeichnet, dass** der Draht aus Platinlegierung mit mindestens 75 Gew.-% Platin besteht

6. Verfahren gemäß einem oder mehreren der Ansprüche 1 bis 3, **dadurch gekennzeichnet, dass** der verwendete Draht aus Palladium- oder einer Palladiumlegierung besteht

7. Verfahren gemäß Anspruch 4, **dadurch gekennzeichnet, dass** der Draht aus Palladiumlegierung mit mindestens 75 Gew.-% Palladium besteht

8. Verfahren zur katalytischen Oxidation von Ammoniak, die Schritte enthaltend
• bereitstellen von Edelmetallnetzen entsprechend einem oder mehreren der Ansprüche 1 bis 7
• Einbau eines Netzstapels beinhaltend Edelmetallnetze entsprechend einem oder mehreren der Ansprüche 1 bis 7 in einen Strömungsreaktor (1)
• Zuführung eines Gases beinhaltend Ammoniak und Sauerstoff bei einer Temperatur im Strömungsreaktor zwischen 500°C und 1300°C und einem Druck zwischen 0,1 MPa und 1,4 MPa.
